# EUROPEAN PATENT APPLICATION

(11) **EP 3 988 353 A1**
(43) Date of publication of application: **27.04.2022**
(21) Application number: 21204085.1
(22) Date of filing: 21.10.2021
(51) Int. Cl.: B60G 11/27, B60G 17/015, B60G 17/052, B60G 17/0185, B60G 17/056

(54) **VEHICLE SUSPENSION APPARATUS**

(30) Priority: 26.10.2020 GB 202016985
(71) Applicant: Haldex Brake Products AB, 26124 Landskrona (SE)
(72) Inventor: KRAUS, Alexander, 76532 Baden-Baden (DE)
(74) Representative: Forresters IP LLP

(57) **Abstract**

A vehicle suspension apparatus (10) including a valve (12) having an inlet port (14) which is fluidly communicable with a source of pressurised fluid, an outlet port (16) which is fluidly communicable with a suspension actuator (18), and an exhaust port (20) which is fluidly communicable with a low-pressure area, the valve (12) also including a valve actuation member (30) which is moveable between a first position to enable the flow of fluid from the supply of pressurised fluid to the suspension actuator (18) and a second position to enable the flow of fluid from the suspension actuator (18) to the exhaust port (20), the vehicle suspension apparatus (10) also including an electronic control device (2) which is operable to control movement of the valve actuation member (30); wherein the vehicle suspension apparatus (10) also includes an electrical energy storage device (6) which is operable to supply electrical energy to the electronic control device (2).

## Description

This invention relates to a vehicle suspension apparatus.

It is known in the art of vehicles including a tractor and one or more trailers, to provide a suspension apparatus which enables levelling of the or each trailer. The suspension apparatus includes a raise/lower valve for controlling the height of the suspension. The valve includes an inlet, which is in fluid communication with a supply of pressurised fluid, for example a suspension reservoir; an outlet, which is in fluid communication with a suspension actuator, for example suspension bellows; and an exhaust port, which is capable of venting to atmosphere or another low pressure area. The valve is typically manually operable via a handle which is located on the exterior of the vehicle. Electronically operable raise/lower valves are also known. An electromechanical suspension apparatus is disclosed in WO2020/120619.

An aim of the invention is to provide an improved suspension apparatus.

There is provided a vehicle suspension apparatus including a valve having an inlet port which is fluidly communicable with a source of pressurised fluid, an outlet port which is fluidly communicable with a suspension actuator, and an exhaust port which is fluidly communicable with a low-pressure area, the valve also including a valve actuation member which is moveable between a first position to enable the flow of fluid from the supply of pressurised fluid to the suspension actuator and a second position to enable the flow of fluid from the suspension actuator to the exhaust port, the vehicle suspension apparatus also including an electronic control device which is operable to control movement of the valve actuation member; wherein the vehicle suspension apparatus also includes an electrical energy storage device which is operable to supply electrical energy to the electronic control device.

The valve actuation member may be a pivotable valve member.

The pivotable valve member may be a flexure member.

The electrical energy storage device may be operable in the event of lack or loss of electrical energy from a primary supply of electrical energy to the electronic control device.

The electrical energy storage device may be operable as secondary supply of electrical energy to the electronic control device.

The vehicle suspension apparatus may include a manual adjustment device which is operable to control movement of the valve adjustment member.

The manual adjustment device may be operable to override the electronic control device.

The electrical energy storage device may be chargeable or rechargeable.

The electrical energy storage device may be a capacitor.

The vehicle suspension apparatus may include a plurality of capacitors.

The suspension apparatus may be controllable automatically by the electronic control device.

The suspension apparatus may be controllable automatically by the electronic control device, wherein the electronic control device may be supplied with electrical energy by the electrical energy storage device.

There is also a provided a vehicle including a vehicle suspension apparatus as described herein.

The vehicle may include a primary supply of electrical energy which is connectable to the vehicle suspension apparatus, in order to supply electrical power to the electronic control device, the electrical energy storage device of the vehicle suspension apparatus being operable in the event of disconnection of the primary supply of electrical energy from the vehicle suspension apparatus.

The vehicle may include a tractor and a trailer, the primary supply of electrical energy being provided on the tractor and the vehicle suspension device and the electrical energy storage device being provided on the trailer.

Embodiments of the invention will now be described, by way of example only, with reference to the accompanying drawings, of which:
FIGURE 1 depicts a vehicle including a tractor and a trailer;
FIGURE 2 is a side cross-sectional view of a suspension apparatus;
FIGURE 3A and 3B are front cross-sectional views of the suspension apparatus of Figure 2, showing a manual adjustment device of the suspension apparatus in a disengaged and engaged position, respectively; and
FIGURE 4 is an illustrative circuit diagram of the suspension apparatus.

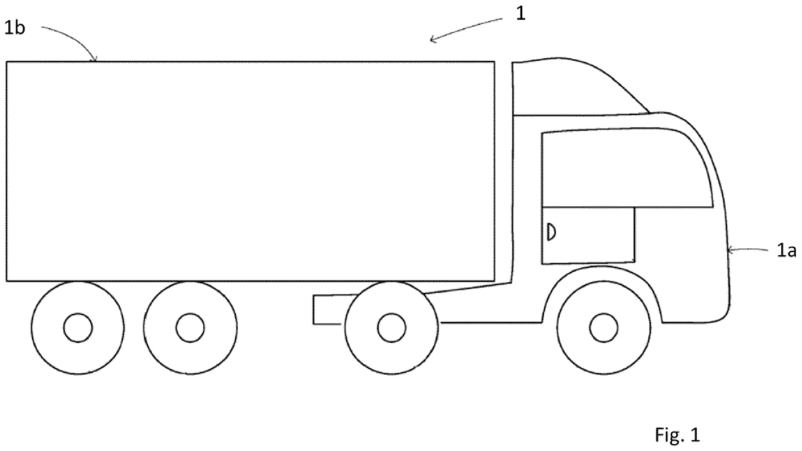

Referring to Figure 1, there is shown a vehicle 1, including a tractor 1a and a trailer 1b.

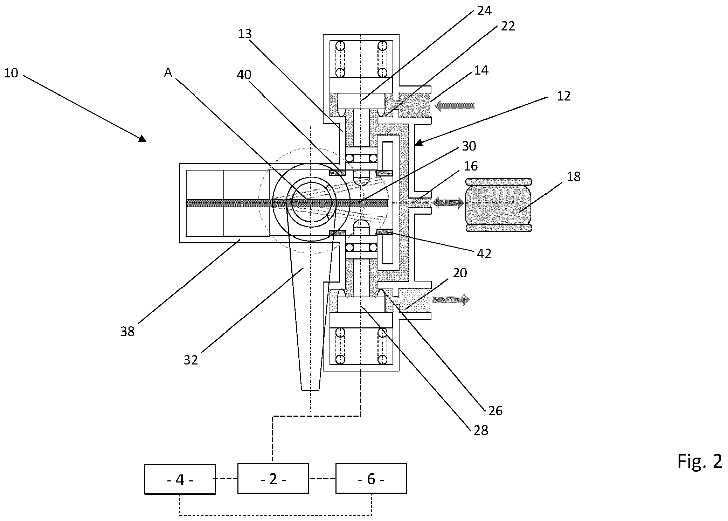

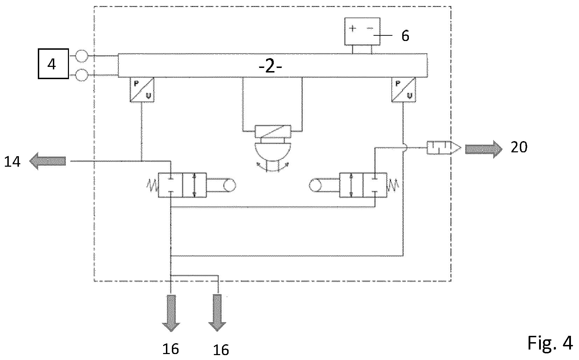

Referring to Figures 2 - 4, there is shown a vehicle suspension apparatus 10. The suspension apparatus 10 is suitable for use with the vehicle 1. The suspension apparatus is suitable for raising and lowering a suspension height of the trailer 1B.

The suspension apparatus 10 includes a valve 12 which is operable to control the height of a vehicle suspension actuator 18, e.g. suspension bellows. The valve 12 includes a valve body 13, an inlet port 14, which is in fluid communication with a supply of pressurised fluid, for example a suspension reservoir; an outlet port 16, which is in fluid communication with the suspension actuator 18; and an exhaust port 20, which is capable of venting to atmosphere or another low pressure area. The valve 12 also includes a first valve seat 22 and a first valve member 24 which is moveable between a closed position against the first valve seat 22 to close the inlet port 14, and an open position in which the first valve member 24 is spaced from the first valve seat 22, to open the inlet port 14, to permit fluid flow from the source of pressurised fluid into the valve body 13. The valve 12 also includes a second valve seat 26 and a second valve member 28 which is moveable between a closed position against the second valve seat 26 to close the exhaust port 20, and an open position in which the second valve member 28 is spaced from the second valve seat 26 to open the exhaust port 20, to permit the flow of fluid from the valve body 13 to atmosphere or other low pressure region. The first and second valve members 24, 28 may be formed as separate members, or may be formed as a single member.

The valve 12 also includes a valve actuation member 30, which is operable to move the first and second valve members 24, 28 between their respective open and closed positions. The valve actuation member 30 is moveable between a first position and a second position. The default position of the valve actuation member is an intermediate position between the first and second positions. In its first position (shown in dotted lines in Figure 2), the valve actuation member 30 engages with the first valve member 24, and positions the first valve member 24 in its open position, thus opening the inlet port 14. In its second position (also shown in dotted lines in Figure 2), the valve actuation member 30 engages with the second valve member 28, and positions the second valve member 28 in its open position, thus opening the exhaust port 20. The valve actuation member 30 may also occupy an intermediate position, between its first and second positions. When the valve actuation member 30 is in its intermediate position, the valve actuation member 30 engages neither the first valve member 24 nor the second valve member 28, such that both the first valve member 24 and the second valve member 28 occupy their closed positions.

The valve actuation member 30 may be manufactured from or include a resilient material. The valve actuation member 30 may be pivotable or "hinged" to enable movement between the first, second and intermediate positions. The valve actuation member 30 may be in the form of a flexure. It will be understood that other forms of valve actuation member may be provided. A pivotable or hinged valve actuation member, for example a flexure, is advantageous.

The suspension apparatus 10 is electronically operable. The valve 12 may be a direct acting solenoid valve. In the example shown in the Figures, the valve 12 includes a first electromagnet 40, which is associated with the first valve seat 22 and a second electromagnet 42, which is associated with the second valve seat 26. The valve actuation member 30 may include a ferromagnetic material, such that energisation of the first electromagnet 40 attracts the valve actuation member 30 towards its first position, and energisation of the second electromagnet 42 attracts the valve actuation member 30 towards its second position. The suspension apparatus 10 may include or be communicable with an Electronic Control Unit (ECU) 2. The ECU 2 may be integral with the suspension apparatus. 10. The ECU may be part of a vehicle braking system.

The ECU 2 may provide signals to energise the first and second electromagnets 40, 42 appropriately, to provide a desired suspension height.

One or more sensors may be provided in communication with the control unit in order to provide an indication of suspension height. The ECU 2 may determine whether adjustment of the suspension height is required, for example from signals provided by one or more of the or each of the sensors, and control the electromagnets 40, 42 accordingly.

The suspension apparatus 10 may be connectable to a primary supply of electrical energy 4. The suspension apparatus 10 may be disconnected from the primary supply of electrical energy 4. The primary supply of electrical energy 4 may be a primary source of electrical energy for the vehicle, and may supply electrical energy to other electrical/electronic apparatus of the vehicle. The primary supply of electrical energy 4 may be positioned on the tractor 1a of the vehicle and the suspension apparatus 10 may be positioned on a trailer 1b of the vehicle. The tractor 1a and the trailer 1b of the vehicle may be disconnectable from one another.

The suspension apparatus 10 includes an electrical energy storage device 6 to provide electrical energy to the ECU and/or the valve 12. The electrical energy storage device 6 may be integral with the ECU 2. The electrical energy storage device 6 may be a capacitor. It will be appreciated that the electrical energy storage device 6 may include a single capacitor of appropriate capacitance, or a plurality of capacitors electrically connected together, for example in parallel, to achieve a desired capacitance. The or each capacitor may be a supercapacitor. It will be understood that the electrical energy storage device 6 may be of any appropriate kind, for example a cell or battery. The electrical storage device 6 may include different types of energy storage device. For example, the electrical storage device may include a combination of one or more cells/batteries and one or more capacitors. The electrical energy storage device 6 may be a secondary supply of electrical energy.

It will be understood that the relative positions of the suspension apparatus 10, the ECU 2, the primary supply of electrical energy 4 and the electrical energy storage device 6 in Figure 2 are for illustrative purposes only. Similarly the location of the electrical connection of the ECU 2 to the valve 12 is for illustrative purposes only.

The suspension apparatus may include a manual adjustment device. The manual adjustment device may, for example, be a handle 32. The handle 32 may be manually operable to move the valve actuation member 30 between its first, intermediate and second positions. The handle 32 may be rotatable to move the valve actuation member 30. The handle 32 may be rotatable about a first axis A.

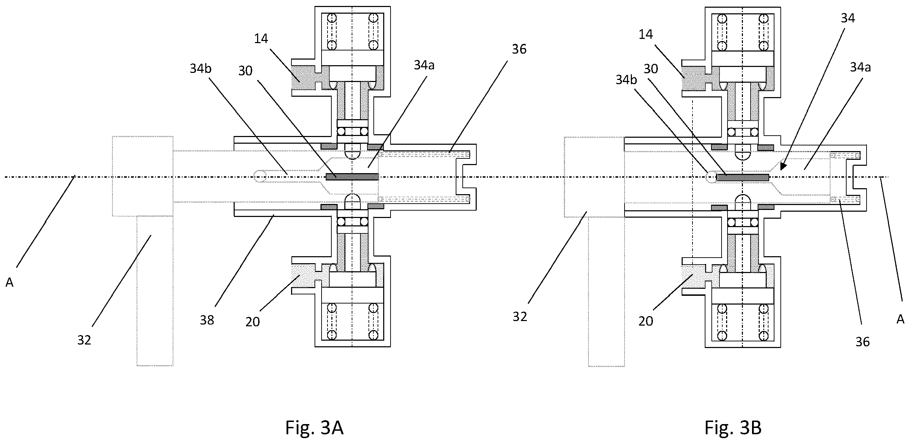

The handle 32 may also be moveable between an engaged position, wherein the handle 32 is engaged with the valve actuation member 30, and is operable to move the valve actuation member 30 (as shown in Fig 3B), and a disengaged position wherein the handle is disengaged from the valve actuation member 30, and movement of the handle 32 does not cause movement of the valve actuation member 30 (as shown in Fig. 3A). The handle 32 may be linearly moveable between the disengaged position and engaged position. The linear movement of the handle 32 between the engaged and disengaged positions may be along, or substantially parallel with the first axis A. The handle 32 may include an engagement formation 34 for engaging a part of the valve actuation member 30. The engagement formation 34 may include a first engagement portion 34a and a second engagement portion 34b. When the handle 32 is in its disengaged position, the valve actuation member 30 may be located in the first engagement or "clearance" portion 34a, wherein the handle 32 does not engage with the valve actuation member 30, and rotation of the handle 32 about the first axis A does not effect movement of the valve actuation member 30. When the handle 32 is in its engaged position, at least a part of the valve actuation member 30 may be located in the second engagement portion 34b, such that the handle 32 engages with the valve actuation member 30, and rotation of the handle 32 about the first axis A effects movement of the valve actuation member 30 between its first, second and intermediate positions. The suspension apparatus 10 may include a biasing member 36 to bias the handle 32 into one of the engaged position or disengaged position. The biasing member 36 may be a resilient biasing member, for example a spring. The biasing member 36 may bias the handle 32 towards the disengaged position. The biasing member 36 may be positioned between a part of the handle 32 and a housing 38 of the suspension apparatus 10. Part of the handle 32 may be accessible from the exterior of the vehicle. Operation of the manual adjustment device may be as set out in WO2020/120619. It will be understood that the incorporation of a manual adjustment device is optional.

In use, the suspension assembly 10 may be located on the trailer 1b, and the primary supply of electrical energy 6 may be located on the tractor. The suspension assembly 10 may be electrically controlled, to maintain a nominal ride height, for example.

The ability to adjust the suspension height electronically is advantageous in that it may be possible to set different heights for different situations, for example different loading conditions, and/or it may be possible to adjust the suspension height automatically, for example in response to a signal from a sensor.

In the event of loss or lack of electrical power, for example, in the event of the trailer 1b being disconnected from its associated tractor 1a, the suspension assembly 10 may be disconnected from the primary supply of electrical energy 4.

The electrical energy storage device 6 enables electronic operation of the suspension apparatus 10 in the event of loss or lack of an electrical connection between the primary supply of electrical energy 4 and the suspension apparatus 10. The electrical energy storage device 6 may be configured to provide sufficient electrical energy to operate the valve 12 for a predetermined length of time. The electrical energy storage device 6 may be configured to store and supply sufficient electrical energy to complete a predetermined number of operations of the suspension apparatus. For example, the electrical energy storage device 6 may be configured to store and supply sufficient electrical energy to control a predetermined number of complete "build" and dump" cycles of the vehicle suspension actuator 18. For example, the electrical energy storage device 6 may be configured to store and supply sufficient electrical energy to control between one and ten, for example five, complete "build" and dump" cycles of the vehicle suspension actuator 18. Where the electrical energy storage device 6 includes one or more capacitors, an appropriate capacitance may be selected in accordance with the requirements of the electrical energy storage device. The capacitance may be between approximately 1 Farad and approximately 10 Farads. The capacitance may be approximately 3 Farads or approximately 4 Farads. Supercapacitors are considered particularly advantageous in this arrangement owing to their high capacity, fast charge/discharge rates, low voltage requirements and low leakage.

The electrical energy storage device 6 may be chargeable or rechargeable. Charging or recharging the electrical energy storage device 6 may be carried out by the primary supply of electrical energy. Charging or recharging the electrical energy storage device 6 may be carried out by connection of the trailer 1b to the tractor 1a. Charging or recharging of the electrical energy storage device 6 may be carried out by connecting the electrical energy storage device 6 to an alternative supply of electrical energy.

The electrical energy storage device 6 may also be communicable with a transmitter device, to enable low power "remote" or wireless adjustment of the suspension device, so as to adjust the height of the trailer 1b.

The provision of the electrical energy storage device 6 is advantageous because electronic control of the suspension apparatus 10 may continue after loss or lack of connection to the primary supply of electrical energy, for example after the tractor 1a has been disconnected from the trailer 1b. Therefore changes in height which might otherwise occur, for example during loading and unloading of the trailer 1b, can be compensated for automatically, by the ECU 2. If a load is being transferred to or from the trailer 1b, by a forklift truck, for example, a small change in height of the trailer 1b relative to a loading bay/dock may cause an obstruction and inhibit loading and/or unloading of the trailer 1b. In such circumstances, it would typically be necessary to carry out multiple manual adjustments of the height of the trailer 1b. Often, a gap between a refrigerated trailer and the dock/loading bay may be surrounded by a curtain, meaning that there is no access to the side of the trailer 1b from the loading position. It is known to provide a second manual height adjustment device; however, this can compromise the thermal lining of a refrigerated trailer 1b. The provision of the electrical energy storage device 6 is advantageous since it overcomes the problem of access to the manual height adjustment device. The provision of the electrical energy storage device 6 removes the need to make multiple height adjustments of the trailer 1b during loading/unloading. Providing the electrical energy storage device 6 may enable remote or "hands-free" adjustment of the suspension apparatus 10, so as to enable remote or hands-free adjustment of the height of the trailer 1b.

Since the valve 12 includes a pivotable actuation member 30, only a small amount of energy is required to actuate the valve, therefore storing a sufficient amount of electrical energy in the electrical energy storage device 6 may be accomplished without the need to carry heavy and/or large energy storage devices in proximity to the suspension apparatus. Capacitors are particularly advantageous, since they are quick to charge (quicker than batteries) and lightweight (lighter than lead-acid batteries, for example).

Whilst the electrical energy storage device 6 provides advantages compared with a manual adjustment device 32 for adjusting the height of the suspension apparatus 10 without the primary supply of electrical energy being connected to the valve 12, as described above, it may be advantageous to provide a combination of a manual adjustment device 32 and electrical energy storage device 6. Where a manual adjustment device 32 is provided, the suspension apparatus 10 may be manually adjustable. It is possible to adjust the height of the suspension apparatus 10 without the primary supply of electrical energy 4 or the electrical energy storage device 6 being connected to the valve 12. Manual adjustment may be advantageous in situations where a suspension height other than "ride height" is required, for example to adjust the height of the vehicle 1 to match another body, for example a vehicle dock (e.g. a loading bay) or another vehicle, for example to provide roll-on-roll-off ("Ro-Ro") capability, but the vehicle 1, e.g. the trailer 1b, is disconnected from an electrical power supply. The manual adjustment device 32 may be used to override electronic control of the suspension apparatus 10.

Providing an electrical energy storage device 6 as well as a manual adjustment device 32 is advantageous, since in the event of lack or loss of connection to the primary supply of electrical energy 4, the suspension apparatus may continue to operate without manual intervention for a period of time and/or for a number of operations, but in the event of exhaustion and/or disconnection and/or failure of the electrical energy storage device 6, the manual adjustment suspension apparatus may be used to operate/control the suspension apparatus 10. Where provided, the manual adjustment device 32 may also be used to override either or both of the primary supply of electrical energy 4 and the electrical energy storage device 6.

Representative features are set out in the following claims which stand alone or may be combined, in any combination, with one or more features disclosed in the text and/or drawings of the specification.

When used in this specification and claims, the terms "comprises" and "comprising" and variations thereof mean that the specified features, steps or integers are included. The terms are not to be interpreted to exclude the presence of other features, steps or components.

The features disclosed in the foregoing description, or the following claims, or the accompanying drawings, expressed in their specific forms or in terms of a means for performing the disclosed function, or a method or process for attaining the disclosed result, as appropriate, may, separately, or in any combination of such features, be utilised for realising the invention in diverse forms thereof.

Although certain example embodiments of the invention have been described, the scope of the appended claims is not intended to be limited solely to these embodiments. The claims are to be construed literally, purposively, and/or to encompass equivalents.

## Claims

1. A vehicle suspension apparatus including a valve having an inlet port which is fluidly communicable with a source of pressurised fluid, an outlet port which is fluidly communicable with a suspension actuator, and an exhaust port which is fluidly communicable with a low-pressure area, the valve also including a valve actuation member which is moveable between a first position to enable the flow of fluid from the supply of pressurised fluid to the suspension actuator and a second position to enable the flow of fluid from the suspension actuator to the exhaust port, the vehicle suspension apparatus also including an electronic control device which is operable to control movement of the valve actuation member; wherein the vehicle suspension apparatus also includes an electrical energy storage device which is operable to supply electrical energy to the electronic control device.

2. A vehicle suspension apparatus according to claim 1 wherein the valve actuation member is a pivotable valve member.

3. A vehicle suspension apparatus according to claim 1 or claim 2 wherein the pivotable valve member is a flexure member.

4. A vehicle suspension apparatus according to any of the preceding claims wherein the electrical energy storage device is operable in the event of lack or loss of electrical energy from a primary supply of electrical energy to the electronic control device.

5. A vehicle suspension apparatus according to any of the preceding claims wherein the electrical energy storage device is operable as secondary supply of electrical energy to the electronic control device.

6. A vehicle suspension apparatus according to any of the previous claims including a manual adjustment device which is operable to control movement of the valve adjustment member.

7. A vehicle suspension apparatus according to claim 5 wherein the manual adjustment device is operable to override the electronic control device.

8. A vehicle suspension apparatus according to any of the preceding claims wherein the electrical energy storage device is chargeable or rechargeable.

9. A vehicle suspension apparatus according to any of the preceding claims wherein the electrical energy storage device is a capacitor.

10. A vehicle suspension apparatus according to claim 9 including a plurality of capacitors.

11. A vehicle suspension apparatus according to any of the preceding claims wherein the suspension apparatus is controllable automatically by the electronic control device.

12. A vehicle suspension apparatus according to claim 11, wherein the suspension apparatus is controllable automatically by the electronic control device, wherein the electronic control device is supplied with electrical energy by the electrical energy storage device.

13. A vehicle including a vehicle suspension apparatus according to any of claims 1 to 12.

14. A vehicle according to claim 13 including a primary supply of electrical energy which is connectable to the vehicle suspension apparatus, in order to supply electrical power to the electronic control device, the electrical energy storage device of the vehicle suspension apparatus being operable in the event of disconnection of the primary supply of electrical energy from the vehicle suspension apparatus.

15. A vehicle according to claim 13 or claim 14 including a tractor and a trailer, the primary supply of electrical energy being provided on the tractor and the vehicle suspension device and the electrical energy storage device being provided on the trailer.
